# EUROPEAN PATENT APPLICATION

(11) **EP 4 521 314 A1**
(43) Date of publication of application: **12.03.2025**
(21) Application number: 24193805.9
(22) Date of filing: 09.08.2024
(51) Int. Cl.: G06Q 10/04, G06Q 10/06, G06Q 50/06

(54) **METHOD AND SYSTEM FOR ELECTRICITY CONSUMPTION PREDICTION**

(30) Priority: 07.09.2023 IN 202321060299
(71) Applicant: Tata Consultancy Services Limited, Mumbai, Maharashtra 400021 (IN)
(72) Inventor: SUBRAMANIAN, SIVAKUMAR, Pune 411013 (IN); GUJAR, PRANAV, Pune 411057 (IN); NISTALA, SRI HARSHA, Pune 411013 (IN); SHINDE, GOPAL, Pune 411006 (IN); AGRAWAL, ROSHNI, Pune 411013 (IN); RUNKANA, VENKATARAMANA, Pune 411013 (IN); KULKARNI, VINAY, Pune 411013 (IN)
(74) Representative: Goddar, Heinz J.

(57) **Abstract**

Existing electricity consumption prediction approaches depend largely on data-based models, which may be statistical techniques or more precisely time-series predictions that predict based on the auto-regressive nature of the load curve with a few external variables at best, such as calendar events and ambient temperature. While these models are effective to a certain degree for the overall grid level requirements, they may not be able to predict disruptive changes that may happen over longer periods of time, such as the demographic shifts, etc. Method and system disclosed herein predict the electricity consumption by taking into consideration various parameters associated with such disruptive changes, and then predict the electricity consumption in a target area by aggregating the electricity consumption predicted at the agent level.

## Description

### CROSS-REFERENCE TO RELATED APPLICATIONS AND PRIORITY

The present application claims priority to Indian application no. 202321060299, filed on September 7, 2023.

### TECHNICAL FIELD

The disclosure herein generally relates to electricity consumption, and, more particularly, to a method and system for electricity consumption prediction.

### BACKGROUND

Electricity plays a critical role in our daily personal and other spheres of life. The consumption of electricity is determined by the electrical appliances or electrical equipment that all the consumers use at a given instance of time.

Electricity consumption is a strong indicator of economic development of a region as higher per capita consumptions correlate to more developed regions. It is highly likely that the world's energy needs shall continue to rise as more regions become better developed. Moreover, this will be influenced by technological developments, such as more efficient appliances/equipment, increased automation, adoption of Electric Vehicles (EVs) for transport, switching from fossil fuel dependent equipment to electricity driven systems and so on. Further, the demographic changes will have a strong bearing on the consumption. More importantly, the evolution of these factors is not fully deterministic. This makes the prediction of electricity consumption both in short term and longer term an important and hard problem.

It is well known that daily electricity consumption goes through a signature variation with some lean and peak periods due to an established collective usage pattern. This daily consumption graph as a function of time is referred as load curve. It is easy to see that this curve also goes through seasonal variations.

For short term predictions, utility production planners have been depending largely on data-based models. These are normally based on statistical techniques or more precisely time-series predictions that predict based on the auto-regressive (repeating) nature of the load curve with a few external variables at best, such as calendar events and ambient temperature. While these models are effective to a certain degree for the overall grid level requirements, they may not be able to predict disruptive changes that may happen over longer periods of time, such as the demographic shifts, etc. The data-based approaches are solely dependent on the observations from the past and they assume that data represents all possible behaviors of the system - assumptions that rarely hold.

### SUMMARY

Embodiments of the present disclosure present technological improvements as solutions to one or more of the above-mentioned technical problems recognized by the inventors in conventional systems. For example, in one embodiment, a processor implemented method of electricity consumption prediction is provided. The method includes receiving, via one or more hardware processors, a requirement data comprising a) a region of interest, b) a target time period. Further, one or more distributions of interest for a plurality of agents from a population of the region of interest for the target time period are predicted, via the one or more hardware processors, using a plurality of data models, wherein the one or more distributions of interest comprises of a spatial and temporal distribution of each of the plurality of agents and associated current values. Further, each of the plurality of agents is grouped via the one or more hardware processors, to one of a) an individual agent category, and b) a collective agent category, characterized by one or more activities being performed by each of the plurality of agents, by processing the spatial and temporal distributions of each of the plurality of agents and associated current values. Further, the electricity consumption for the target time period is predicted, via the one or more hardware processors, for each of the plurality of agents in the individual agent category and the collective agent category, based on a) the one or more distributions of interest predicted for each of the plurality of agents, b) information on one or more electrical devices and associated parameter values for the one or more distributions of interest, and c) a historical data with respect to one or more factors affecting the electricity consumption for the one or more distributions of interest and for the associated parameter values for different combinations of the one or more electrical devices. Further, the predicted electricity consumption of the plurality of agents is aggregated, via the one or more hardware processors, to determine an electricity consumption at the region of interest.

In an embodiment of the method, the one or more of the plurality of agents undergo transition between two or more agent categories during the target time period, wherein by following the transition between the two or more agent categories, associated one or more activities and one or more electrical devices are identified.

In an embodiment of the method, the plurality of data models comprises of a residential consumer model, a transport consumer model, an industrial consumer model, an institutional consumer model, an agricultural consumer model, and an environmental model, and wherein the plurality of data models are physics-driven, data-driven and hybrid models.

In an embodiment of the method, the plurality of data models are re-tuned if a measured accuracy of the electricity consumption prediction is below a threshold of accuracy.

In an embodiment of the method, the one or more factors affecting the electricity consumption, forming the historical data and associated current data, comprises a) a weather data, b) a demographic and economic data, c) an energy price data, d) a calendar data, e) a technology data, f) an administrative and policy decision data, g) a land use data, and h) a usage and behaviour data.

In an embodiment of the method, the plurality of data models are trained using the historical data as training data, by: pre-processing the historical data to obtain a pre-processed historical data; dividing the historical data to a training data set and a testing dataset; training each of the plurality of data models using the training data set to capture one or more distribution parameters associated with an energy consumption pattern of the historical data at each of a plurality of time instances; and testing each of the plurality of data models using the testing dataset, to obtain an associated confidence score, wherein each of the plurality of data models is retuned or retrained till the associated confidence score is at least matching a threshold of confidence score.

In an embodiment of the method, the current values in the spatial distribution of each of the plurality of agents are associated with one or more of a current location of the agent, a collective group, an agent role, the one or more activities, and one or more electrical device characteristics.

In an embodiment of the method, the distribution of interest comprises of a behavioral distribution of a plurality of roles associated with each of the plurality of agents, wherein each of the plurality of roles has an associated set of probable activities, and wherein the one or more electrical devices are associated with the set of these activities.

A system for electricity consumption prediction is provided. The system includes one or more hardware processors, a communication interface, and a memory storing a plurality of instructions. The plurality of instructions cause the one or more hardware processors to receive a requirement data comprising a) a region of interest, b) a target time period. Further, one or more distributions of interest for a plurality of agents from a population of the region of interest for the target time period are predicted, via the one or more hardware processors, using a plurality of data models, wherein the one or more distributions of interest comprises of a spatial and temporal distribution of each of the plurality of agents and associated current values. Further, each of the plurality of agents is grouped via the one or more hardware processors, to one of a) an individual agent category, and b) a collective agent category, characterized by one or more activities being performed by each of the plurality of agents, by processing the spatial and temporal distributions of each of the plurality of agents and associated current values. Further, the electricity consumption for the target time period is predicted, via the one or more hardware processors, for each of the plurality of agents in the individual agent category and the collective agent category, based on a) the one or more distributions of interest predicted for each of the plurality of agents, b) information on one or more electrical devices and associated parameter values for the one or more distributions of interest, and c) a historical data with respect to one or more factors affecting the electricity consumption for the one or more distributions of interest and for the associated parameter values for different combinations of the one or more electrical devices. Further, the predicted electricity consumption of the plurality of agents is aggregated, via the one or more hardware processors, to determine an electricity consumption at the region of interest.

In an embodiment of the system, the one or more of the plurality of agents undergo transition between two or more agent categories during the target time period, wherein by following the transition between the two or more agent categories, associated one or more activities and one or more electrical devices are identified.

In an embodiment of the system, the plurality of data models comprises of a residential consumer model, a transport consumer model, an industrial consumer model, an institutional consumer model, an agricultural consumer model, and an environmental model, and wherein the plurality of data models are physics-driven, data-driven and hybrid models.

In an embodiment of the system, the plurality of data models are re-tuned if a measured accuracy of the electricity consumption prediction is below a threshold of accuracy.

In an embodiment of the system, the one or more factors affecting the electricity consumption, forming the historical data and associated current data, comprises a) a weather data, b) a demographic and economic data, c) an energy price data, d) a calendar data, e) a technology data, f) an administrative and policy decision data, g) a land use data, and h) a usage and behaviour data.

In an embodiment of the system, the one or more hardware processors are configured to train the plurality of data models using the historical data as training data, by: pre-processing the historical data to obtain a pre-processed historical data; dividing the historical data to a training data set and a testing dataset; training each of the plurality of data models using the training data set to capture one or more distribution parameters associated with an energy consumption pattern of the historical data at each of a plurality of time instances; and testing each of the plurality of data models using the testing dataset, to obtain an associated confidence score, wherein each of the plurality of data models is retuned till the associated confidence score is at least matching a threshold of confidence score.

In an embodiment of the system, the current values in the spatial distribution of each of the plurality of agents are associated with one or more of a current location of the agent, a collective group, an agent role, the one or more activities, and one or more electrical device characteristics.

In an embodiment of the system, the distribution of interest comprises of a behavioral distribution of a plurality of roles associated with each of the plurality of agents, wherein each of the plurality of roles has an associated set of probable activities, and wherein the one or more electrical devices are associated with the set of probable activities.

In yet another aspect, a non-transitory computer readable medium is provided. The non-transitory computer readable medium includes a plurality of instructions, which when executed, causes one or more hardware processors to receive a requirement data comprising a) a region of interest, b) a target time period. Further, one or more distributions of interest for a plurality of agents from a population of the region of interest for the target time period are predicted, via the one or more hardware processors, using a plurality of data models, wherein the one or more distributions of interest comprises of a spatial and temporal distribution of each of the plurality of agents and associated current values. Further, each of the plurality of agents is grouped via the one or more hardware processors, to one of a) an individual agent category, and b) a collective agent category, characterized by one or more activities being performed by each of the plurality of agents, by processing the spatial and temporal distributions of each of the plurality of agents and associated current values. Further, the electricity consumption for the target time period is predicted, via the one or more hardware processors, for each of the plurality of agents in the individual agent category and the collective agent category, based on a) the one or more distributions of interest predicted for each of the plurality of agents, b) information on one or more electrical devices and associated parameter values for the one or more distributions of interest, and c) a historical data with respect to one or more factors affecting the electricity consumption for the one or more distributions of interest and for the associated parameter values for different combinations of the one or more electrical devices. Further, the predicted electricity consumption of the plurality of agents is aggregated, via the one or more hardware processors, to determine an electricity consumption at the region of interest.

In an embodiment of the non-transitory computer readable medium, the one or more of the plurality of agents undergo transition between two or more agent categories during the target time period, wherein by following the transition between the two or more agent categories, associated one or more activities and one or more electrical devices are identified.

In an embodiment of the non-transitory computer readable medium, the plurality of data models comprises of a residential consumer model, a transport consumer model, an industrial consumer model, an institutional consumer model, an agricultural consumer model, and an environmental model, and wherein the plurality of data models are physics-driven, data-driven and hybrid models.

In an embodiment of the non-transitory computer readable medium, the plurality of data models are re-tuned if a measured accuracy of the electricity consumption prediction is below a threshold of accuracy.

In an embodiment of the non-transitory computer readable medium, the one or more factors affecting the electricity consumption, forming the historical data and associated current data, comprises a) a weather data, b) a demographic and economic data, c) an energy price data, d) a calendar data, e) a technology data, f) an administrative and policy decision data, g) a land use data, and h) a usage and behaviour data.

In an embodiment of the non-transitory computer readable medium, the one or more hardware processors are configured to train the plurality of data models using the historical data as training data, by: pre-processing the historical data to obtain a pre-processed historical data; dividing the historical data to a training data set and a testing dataset; training each of the plurality of data models using the training data set to capture one or more distribution parameters associated with an energy consumption pattern of the historical data at each of a plurality of time instances; and testing each of the plurality of data models using the testing dataset, to obtain an associated confidence score, wherein each of the plurality of data models is retuned till the associated confidence score is at least matching a threshold of confidence score.

In an embodiment of the non-transitory computer readable medium, the current values in the spatial distribution of each of the plurality of agents are associated with one or more of a current location of the agent, a collective group, an agent role, the one or more activities, and one or more electrical device characteristics.

In an embodiment of the non-transitory computer readable medium, the distribution of interest comprises of a behavioral distribution of a plurality of roles associated with each of the plurality of agents, wherein each of the plurality of roles has an associated set of probable activities, and wherein the one or more electrical devices are associated with the set of probable activities.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 illustrates an exemplary system for electricity consumption prediction, according to some embodiments of the present disclosure.
FIG. 2 is a flow diagram depicting steps involved in the electricity consumption prediction by the system of FIG. 1, according to some embodiments of the present disclosure.
FIG. 3 illustrates steps involved in the process of training a plurality of data models for the electricity consumption prediction by the system of FIG. 1, in accordance with some embodiments of the present disclosure.
FIG. 4 is a block diagram depicting an example ecosystem of electricity consumption, according to some embodiments of the present disclosure.
FIG. 5 depicts a functional block diagram of the system of FIG. 1 for the electricity consumption prediction, in accordance with some embodiments of the present disclosure.
FIG. 6 depicts examples of databases and input information influencing electricity demand, in accordance with some embodiments of the present disclosure.
FIG. 7 depicts examples of energy modules used by the system of FIG. 1, for the electricity demand prediction, in accordance with some embodiments of the present disclosure.
FIG. 8 depicts block diagram of a data processor unit of the system of FIG. 1, for the electricity demand prediction, in accordance with some embodiments of the present disclosure.
FIG. 9 is a block diagram depicting conversion of pre-processed data to distribution data, by a distribution extraction module of the system of FIG. 5, for the electricity demand prediction, in accordance with some embodiments of the present disclosure.
FIG. 10 is a block diagram depicting generation of distribution evolution data by a distribution evolution module of the system of FIG. 5, for the electricity demand prediction, in accordance with some embodiments of the present disclosure.
FIG. 11 is a block diagram depicting model training for the electricity demand prediction, by the model trainer of the functional implementation of the system of FIG. 5, in accordance with some embodiments of the present disclosure.
FIG. 12 depicts workflow of a Coupled Consumer Demand Predictor (CCDP) of the functional block diagram of the system in FIG. 5, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

In the context of electricity consumption prediction, for short term predictions, utility production planners have been depending largely on data-based models. These are normally based on statistical techniques or more precisely time-series predictions that predict based on the auto-regressive (repeating) nature of the load curve with a few external variables at best, such as calendar events and ambient temperature. While these models are effective to a certain degree for the overall grid level requirements, they may not be able to predict disruptive changes that may happen over longer periods of time, such as the demographic shifts, etc. The data-based approaches are solely dependent on the observations from the past and they assume that data represents all possible behaviors of the system - assumptions that rarely hold.

In order to address these challenges, method and system for electricity consumption prediction, described in the embodiments disclosed herein, provide an approach in which the prediction is done at agent (user) level, which is further aggregated to generate predictions for a target area. In this approach, a plurality of variables that affect the electricity consumption are taken into consideration while modelling an electricity consumption ecosystem, which in turn is used to generate predictions. The method includes receiving, via one or more hardware processors, a requirement data comprising a) a region of interest, b) a target time period. Further, one or more distributions of interest for a plurality of agents from population of the region of interest for the target time period are predicted, via the one or more hardware processors, using a plurality of data models, wherein the one or more distributions of interest comprises of spatial and temporal distributions of each of the plurality of agents and associated current values. Further, each of the plurality of agents is grouped via the one or more hardware processors, to one of a) an individual agent category, and b) a collective agent category, characterized by one or more activities being performed by each of the plurality of agents, by processing the spatial and temporal distributions of each of the plurality of agents and associated current values. Further, the electricity consumption for the target time period is predicted, via the one or more hardware processors, for each of the plurality of agents in the individual agent category and the collective agent category, based on a) the one or more distributions of interest predicted for each of the plurality of agents, b) information on one or more electrical devices and associated parameter values for the one or more distributions of interest, and c) a historical data with respect to one or more factors affecting the electricity consumption for the one or more distributions of interest and for the associated parameter values for different combinations of the one or more electrical devices. Further, the predicted electricity consumption of the plurality of agents is aggregated, via the one or more hardware processors, to determine an electricity consumption at the region of interest.

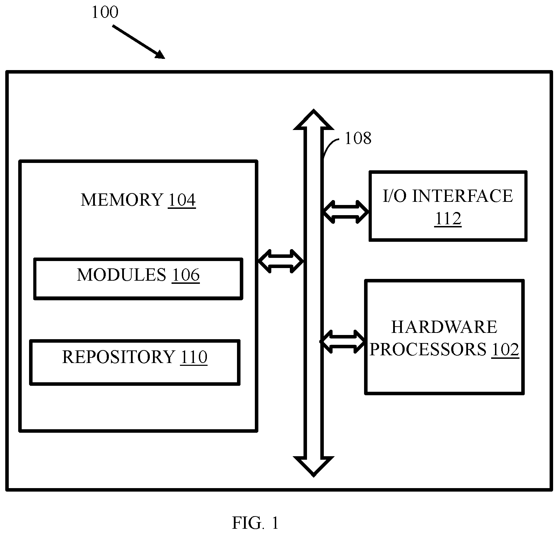

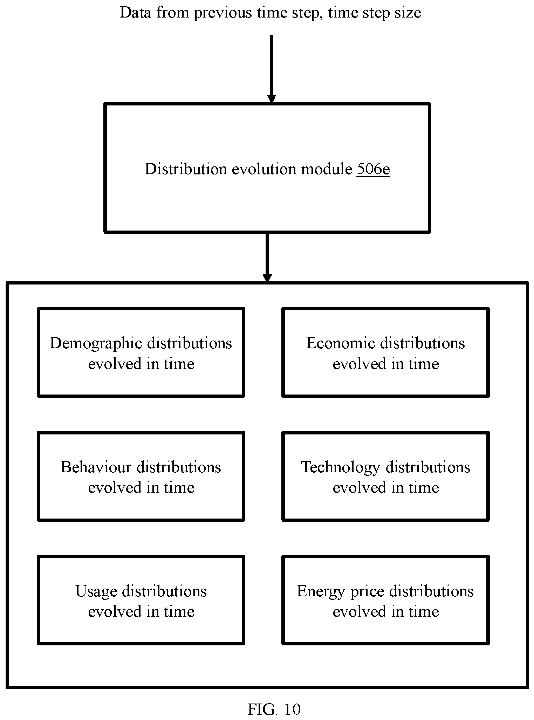

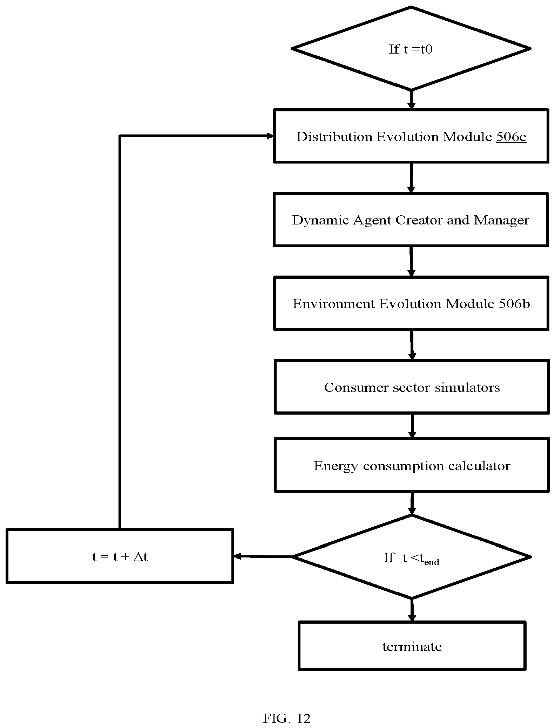

Referring now to the drawings, and more particularly to FIG. 1 through FIG. 12, where similar reference characters denote corresponding features consistently throughout the figures, there are shown preferred embodiments and these embodiments are described in the context of the following exemplary system and/or method.

FIG. 1 illustrates an exemplary system for electricity consumption prediction, according to some embodiments of the present disclosure. The system 100 includes or is otherwise in communication with hardware processors 102, at least one memory such as a memory 104, an I/O interface (alternately referred to as a communication interface) 112. The hardware processors 102, memory 104, and the Input /Output (I/O) interface 112 may be coupled by a system bus such as a system bus 108 or a similar mechanism. In an embodiment, the hardware processors 102 can be one or more hardware processors.

The I/O interface 112 may include a variety of software and hardware interfaces, for example, a web interface, a graphical user interface, and the like. The I/O interface 112 may include a variety of software and hardware interfaces, for example, interfaces for peripheral device(s), such as a keyboard, a mouse, an external memory, a printer and the like. Further, the I/O interface 112 may enable the system 100 to communicate with other devices, such as web servers, and external databases.

The I/O interface 112 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface 112 may include one or more ports for connecting several computing systems with one another or to another server computer. The I/O interface 112 may include one or more ports for connecting several devices to one another or to another server.

The one or more hardware processors 102 may be implemented as one or more microprocessors, microcomputers, microcontrollers, digital signal processors, central processing units, node machines, logic circuitries, and/or any devices that manipulate signals based on operational instructions. Among other capabilities, the one or more hardware processors 102 is configured to fetch and execute computer-readable instructions stored in the memory 104.

The memory 104 may include any computer-readable medium known in the art including, for example, volatile memory, such as static random-access memory (SRAM) and dynamic random-access memory (DRAM), and/or non-volatile memory, such as read only memory (ROM), erasable programmable ROM, flash memories, hard disks, optical disks, and magnetic tapes. In an embodiment, the memory 104 includes a plurality of modules 106.

The plurality of modules 106 include programs or coded instructions that supplement applications or functions performed by the system 100 for executing different steps involved in the process of implant manufacturer and type identification, being performed by the system 100. The plurality of modules 106, amongst other things, can include routines, programs, objects, components, and data structures, which performs particular tasks or implement particular abstract data types. The plurality of modules 106 may also be used as, signal processor(s), node machine(s), logic circuitries, and/or any other device or component that manipulates signals based on operational instructions. Further, the plurality of modules 106 can be used by hardware, by computer-readable instructions executed by the one or more hardware processors 102, or by a combination thereof. The plurality of modules 106 can include various sub-modules (not shown). The plurality of modules 106 may include computer-readable instructions that supplement applications or functions performed by the system 100 for the implant manufacturer and type identification.

The data repository (or repository) 110 may include a plurality of abstracted piece of code for refinement and data that is processed, received, or generated as a result of the execution of the plurality of modules in the module(s) 106.

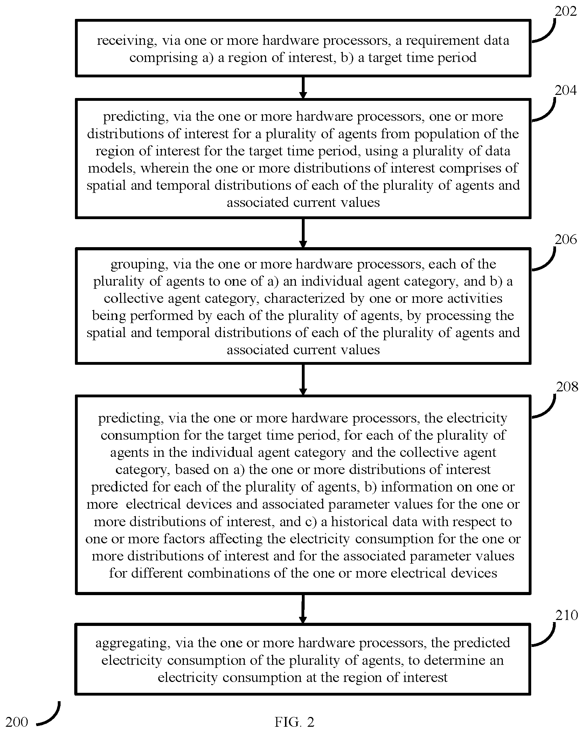

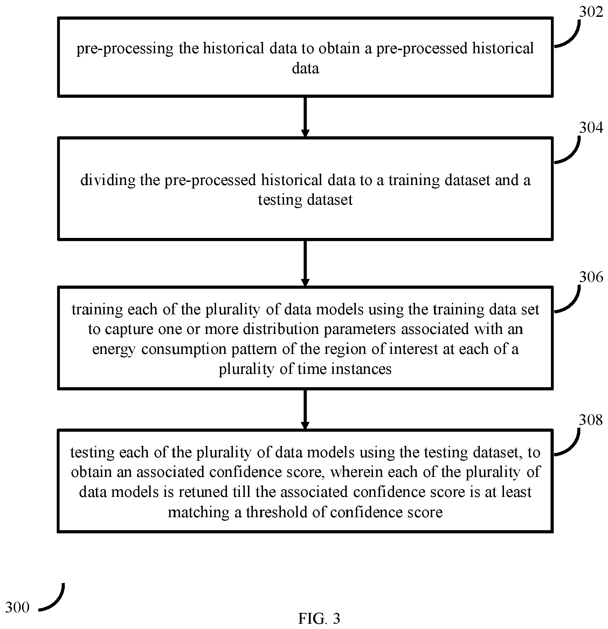

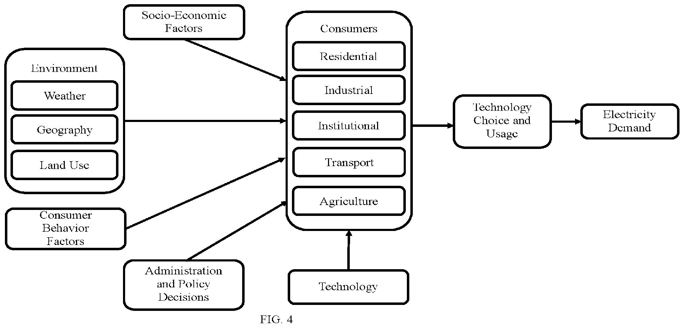

Although the data repository 110 is shown internal to the system 100, it will be noted that, in alternate embodiments, the data repository 110 can also be implemented external to the system 100, where the data repository 110 may be stored within a database (repository 110) communicatively coupled to the system 100. The data contained within such external database may be periodically updated. For example, new data may be added into the database (not shown in FIG. 1) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to the steps in flow diagrams in FIG. 2 and the FIG. 3, and the functional component architectures in FIG. 4 through FIG. 10.

FIG. 2 is a flow diagram depicting steps involved in the electricity consumption prediction by the system of FIG. 1, according to some embodiments of the present disclosure.

In an embodiment, the system 100 comprises one or more data storage devices or the memory 104 operatively coupled to the processor(s) 102 and is configured to store instructions for execution of steps of the method 200 by the processor(s) or one or more hardware processors 102. The steps of the method 200 of the present disclosure will now be explained with reference to the components or blocks of the system 100 as depicted in FIG. 1 and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

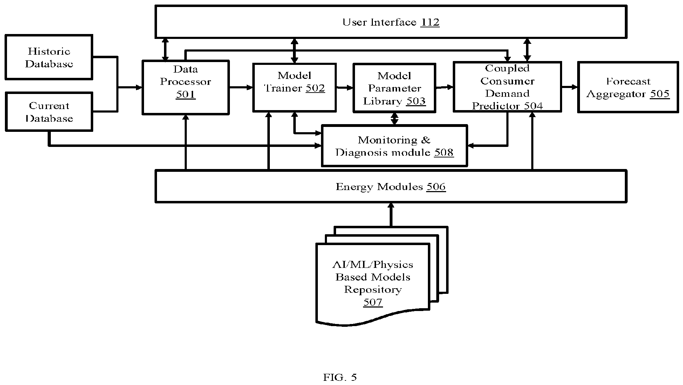

The functional implementation of the system 100, as depicted in FIG. 5, includes a user interface 112, a data processor 501, a model trainer 502, a model parameter library 503, a coupled consumer demand predictor (CCDP) 504, a forecast aggregator 505, a monitoring & diagnosis block/module 508, a plurality of energy modules 506, and AI/ML/Physics Based Models Repository 507. The electricity consumption prediction as being performed by the system 100 is explained with respect to the components as depicted in FIGS. 1 and 5, and the steps in flow diagram FIG. 2.

In an embodiment, in any given geographical area, electricity consumers may belong to different categories, such as, but not limited to, retail or home consumers, industrial consumers, institutional consumers, agricultural consumers, and transportation. An integrated consumer model is generated that brings the different types of consumer segments together to be able to predict the overall energy consumption of a city, community, state, or in general a geographical region of interest. The integrated consumer model uses an Agent-Based Modeling (ABM) approach. The ABM is a bottom-up approach which requires that important drivers (inputs) that determine the timewise consumption of electricity be accounted for. For example, for the residential consumer, it may translate to the appliances that are likely used in a specific time window based on the activity that the residents in the household are likely to be involved in. The approach shall distinguish appliances that are kept in the "ON" state continuously but consume more or less power based on the environmental factors such as weather and use/load. Similarly, the industrial users may be divided into steady load users vs variable load users. For example, a large continuous production plant, such as a cement grinding plant may consume more or less a uniform power when in operation. Whereas a batch or semi-batch small scale industries could show a large variability of power consumption during the day and over the days as well depending on the demands of their product or services. In an embodiment, each consumer is termed as an agent. The consumer in the context of the embodiments disclosed herein may refer to an individual or a group of people. For example, user of a mobile or laptop is an individual user, whereas people travelling by an electric bus maybe considered as a group of consumers. The individual consumers may be classified as belonging to an individual agent category, and the group of consumers are considered as belonging to a collective agent category.

The integrated consumer model is further configured to understand and trace transition of an agent between two or more agent categories during the target time period, wherein by following the transition between the two or more agent categories, associated one or more activities and one or more electrical devices are identified. For example, when an agent is at home, he/she may be using different appliances such as mobile, laptop and so on, hence is a home consumer. The same agent while travelling by the electric bus, may become a transport agent, and upon reaching destination, may become an institutional or industrial agent. After accomplishing his day's work, the transitions in the reverse could be traced.

To assist in longer term predictions, factors that change at slower rate like population density, advancements in electrical technology, adoption of EVs for personal/commercial transport uses, and so on are considered and form part of the integrated consumer model.

The integrated consumer model may further take into consideration, historic data with respect to electricity consumption, in terms of various parameters such as but not limited to the consumer groups, weather, appliances, and so on. The integrated consumer model may comprise of a plurality of sub-models, each one capturing information on a unique parameter and associated values.

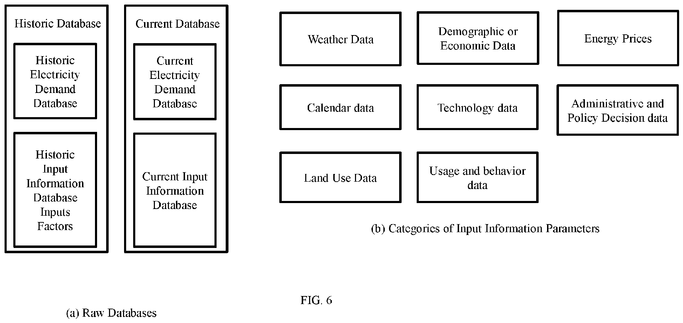

Examples of data that are collected and used for building the integrated consumer model are given in Table. 1 below. Examples of such categories are depicted in FIG. 6 as well. The data maybe collected via one or more suitable interfaces provided by the user interface 112 as depicted in FIG. 5.

**Table. 1**

| **Inputs/Drivers** | **Data source** |
|---|---|
| Historical data | Monthly electricity consumption; consumer type (residential, commercial, industrial, etc.); Self sourcing through renewables (solar; wind, bio, etc.) |
| Weather data | Prediction methods for the past and future weather parameters like ambient temperature, humidity, solar irradiance |
| Calendar data | Holidays, typical working hours, production type (for industries); |
| Demographic | Population distribution and growth data or projections; Immigration/emigration data or projections; Residential areas; Economic indicators; Population aspirational indicators (Education levels; access to education, etc.); Work locations/industries (type); typical commute distances; transport options (including EV) and capacity (purpose); access to public transport and options (frequency, comfort, distance, ...) |
| Socio/Political Climate | Economic development levels/indicators; Employment opportunities; Growth opportunities; Awareness levels of sustainability initiatives; Access to modern technology; |
| Infrastructure | Road length (area); road widths; stability of power supply; etc. |
| Appliance/Equipment | Types of appliances; Rated capacity; Energy ratings (EE); |
| Activity - Use time/duration/type - Appliance | Typical activities of agents that involves electrical appliances/equipment, the appliance usage pattern (starting time, duration of use, appliance maps. When alternatives of electrical appliances (or other means) available, the probability of use in each of the routes. Non-electrical options may be clubbed together (if hybrid, only the electrical contribution may be captured) |

Details of such data are given below:
1. Weather data: Include ambient conditions that influence electricity consumption, such as temperature, wind velocity, sunshine.
2. Calendar data: Readily obtained information about working days, weekends, and other regional/seasonal holidays, such as Diwali, Christmas that shall determine the electricity consumption for different electricity consumer groups / agent categories.
3. Land Use data: The spatial distribution of land use and their relative location with the intended purpose, for example, residential areas, shopping areas, institutional areas, agricultural, industrial area, etc.
4. Demographic or Economic Data: Data regarding the people population in a given area, identified with additional information such as economic indicators, employment status, age distribution, family size, and location/type of the household.
5. Technology Data: Includes information with respect to available electrical technologies for an appliance or equipment that are presently in use. For example, domestic air-conditioners may be rated by the local standards as 3 * to 5* rated based on the energy consumption. In the years to come, even the benchmarks shall change based on the newer technologies that could come into vogue, and accordingly the data may be obtained and used. In some industrial processes, something that is primarily fossil fuel driven process, may be replaced by electricity-based process. In the transportation sector, EVs is an example of the technological evolution that has a strong bearing the electrical energy consumption.
6. Usage and Behavior Data: This data is gathered or predicted using a model to capture factors such as given a technology or usage choice, how likely would a user adopt the (new) technology or how long are they likely to use. This is to capture consumers behavioral aspects. For example, if someone is using a fossil fuel-based vehicle, how likely is the person to adopt an EV. Same way, from the behavioral perspective, how likely they are to recommend EVs to others in their circle of influence.
7. Energy Prices: This is data related to what is the prevailing energy price and slabs as charged to various sectors of the consumers and how is it likely to evolve. More importantly, this handle may be used to influence the consumer behavior.
8. Administrative and Policy Decisions Data: Includes information on important decisions local governments may impose that could potentially drive electricity consumption. These may be in the form of incentives or rules. For example, they may incentivize the EV adoption by providing tax benefits or penalizing (charge more tax or stricter pollution norms) the sale of fossil fuel vehicles. This could also mean introduction of more public transport, etc. Again, the influence of such policies on the behavior of consumers (individuals or others) leaving an impact on the electricity consumption.

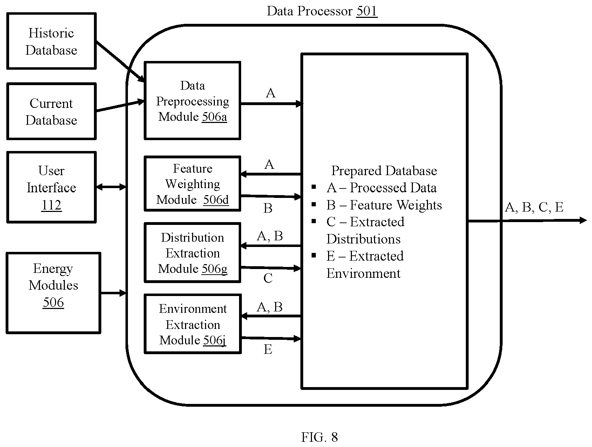

Such data, that is collected from a variety of sources, maybe in a raw form, and may be required to be pre-processed to make them serviceable further, for model building. The raw data is first processed using the "Data Processor 501" as depicted in FIG. 5 (associated components depicted in FIG. 8), which converts the raw data to a form suitable for agent-based models.

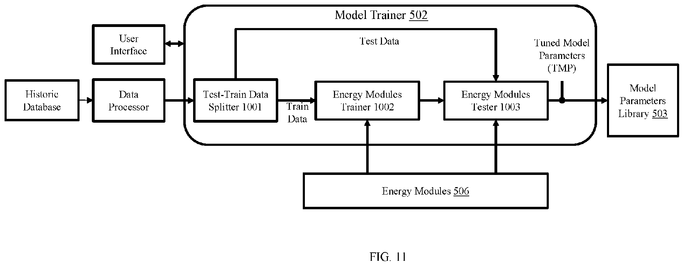

Further, the processed data is used for training of the plurality of data models, which may include evolution and agent response models, and is also used for tuning one or more physics-based models used. In an embodiment, the system 100 may use the Model Trainer 502 as depicted in FIG. 5, for the purpose of training the plurality of data models and generate a plurality of tuned model parameters. As depicted in FIG. 11, the model trainer 502 includes a test-train data splitter 1001, an Energy Modules Trainer 1002c, and an Energy Modules Tester 1003 c. Various steps involved in training the plurality of data models are depicted in method 300 in FIG. 3, and are explained hereafter.

In this process, at step 302 of the method 300, the model trainer 502 pre-processes the historical data to obtain a pre-processed historical data. Further, at step 304 of the method 300, the model trainer 502 divides the historical data to a training data set and a testing dataset using the test-train data splitter 1001. In an embodiment, the division of the historical data to the training data set and a testing dataset maybe based on one or more pre-defined rules, for example, a certain percentage of the historical data may form the training data set, and remaining data may form the testing dataset. Further, at step 306 of the method 300, the model trainer 502 trains each of the plurality of data models using the training data set to capture one or more distribution parameters associated with an energy consumption pattern of the historical data at each of a plurality of time instances, using the Energy Modules Trainer 1002. Further, at step 308 of the method 300, the system 100 tests each of the plurality of data models using the testing dataset, to obtain an associated confidence score, using the Energy Modules Tester 1003. The confidence score may represent extent of similarity of predictions made by each of the plurality of data models to actual data. Tuned model parameters obtained by means of the training of the data models are stored in the model parameters library 503. In an embodiment, each of the plurality of data models is retuned till the associated confidence score is at least matching a threshold of confidence score.

Training of the plurality of data models also involves modeling of agent categories. An agent, who is a user/consumer, may fall into different agent categories, based on various characteristics. For example, a family agent maybe modelled based on the following characteristics/factors.
i. Number and type of residents
ii. Appliances available
iii. Activities - start time (s) - duration - appliance(s) - probability of use or utilization factor
iv. Functions for predicting the power consumption of each appliance when used + base or stand-by power
v. Functions for prediction power consumptions of appliances that depend on external factors
vi. Number, type, age, and capacity of personal transport vehicles available
vii. Number, type, age, and capacity of personal EV transport vehicles if available
viii. Access to public transport vehicles available, number, type, and capacity (relevant for school/college going students or adults using public transport)
ix. Outgoing activity of residents - time - duration - purpose - transport used (probabilistic)

Purpose of agent modeling in a simulation setup is to compute the electricity consumption. Time steps between different simulations could be 1 minute to a day as may be required. Smallest step size shall help predict minor variations in a consumption pattern, while the large step sizes help project for longer terms such as years or decades in advance. When large step sizes are used, the interactions between the model elements shall be limited, still allowing for major interactions. For example, when a step size of 1 day is used, the electricity consumption of a residential (also called family) agent shall be computed for the entire day running through various activities (needs) of human agents in the residence without a direct interaction with other agents such as transport, residential neighbors, institution, etc., in the same simulation time step. The events in the residential agent, institution or industry, such as starting time for office commute, departure time from office for commute, etc., are evaluated first so that each agent can estimate their energy demand curves as independently as they can of other agents in the simulation. It may be possible to sequence the simulations of these agents such that the decision flows determine the execution flow. When the sequencing becomes difficult, each agent may be executed independently. When run independently, though these event times may be learnt from past simulations or drawn from the specified statistical distributions. The demerit of this approximation is that the activities may not be synchronized among the agents within the timestep. It is expected that such approximations may not introduce too much uncertainty in the model predictions/forecasts. Essentially, the interaction time scale among the agents in the simulation increases to the step size. This way the simulation approach used by the system 100 supports multi-timescale predictions, and in turn also reduces the model complexity by reducing the interaction among the agents and achieves faster simulations without impacting the computational time or resources.

The agent modelling is done considering various characteristics matching each consumer or consumer group being modeled. Consider an example of availability of a new housing complex in a residential area. This shall gradually shift (increase) the electricity consumption in this area. This change, when detected, is flagged by a "Spatial Population Distribution" block of the system 100. Based on this input, additional residential agents are created and initialized. The residential agents shall be added with features (appliances, usage pattern, work location) that are typically expected of the neighborhood and based on data specific to demographic details. Further, the individual agents are assigned to an industry and residential agents as created. While modelling the agents, the following type of data are factored in.
1. Population changes: Total number of people in the neighborhood has changed (growth/ diminish). The changes could happen organically due to the birth and death events, or it could be due to immigration or emigration.
2. Population (spatial) distribution changes: Changes associated with addition/removal of residential buildings from a neighborhood.
3. Population demography changes: If there is a substantial shift in the distribution of the consumers (agents), for example the ratio of high-medium-low energy consumers, accordingly existing households are adjusted so that the new recommended ratio is achieved from the existing ratio.
4. Population economy changes: Based on the economic parameter evolution predicted, the agents' features are updated.
5. Population behavior changes: Based on the behavior evolution data, the corresponding agent parameters/features are updated. The behavioral variables can be the consumption pattern, spend pattern, price sensitivity, sustainability awareness, response to peer pressure, administration policy compliance, and so on.
6. Agent Technology Feature: This is related to the appliances that are associated with a collective (or travel) agent that help assign technology related attributes, such as star ratings, electrification of industrial processes or even residential tasks. Evolution is tracked and modeled and is used in forecasting the electricity consumption of the specific agent or appliance/equipment.

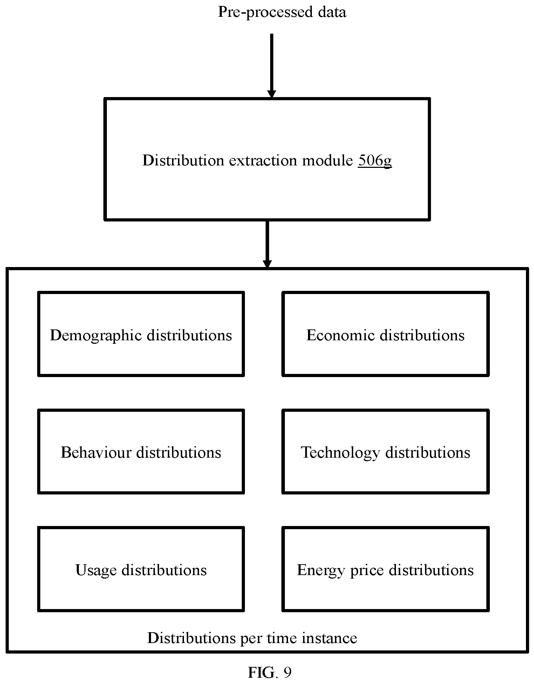

The tuned model parameters obtained by training the plurality of data models, are stored in the Model Parameter Library 503. The Model Parameter Library 503 stores name-value pairs of standard data types, integer, categorical, real, and strings, and may also hold of regression and distribution models and their parameters, i.e., different data structures and their values. The Model Parameter Library 503 may support various data structures that are used to represent different model or parameter entities, for example to store distributions, it can use the name of statistical distribution along with associated parameters, and parameters values as a function of time as it has changed in the past or is likely to change in the future. The distributions may be captured as a tabulation of the variable intervals vs probability distribution (histograms) values, or a decision tree representation of the distribution. Capturing of the distribution data from the pre-processed data, using the distribution extraction module 506g, is depicted in FIG. 9. Various distribution data captured by the distribution extraction module 506g are listed below.
1. Demographic Distribution: Tracks the population distribution/evolution and some of the main characteristics of the population (gender, age, location, economic, etc.).
2. Economic Distribution: Derived from population distribution data helps to track and model the evolutionary nature of the economic strata of the given population. This data further helps to tie up a (residential) agent to an industry/institution depending on their work/economic profile.
3. Behavior Distribution: Human behavior that influences the electricity consumption are captured as the behaviour distribution. For example, a consumer's response to price changes (regimes) of electricity depending on the surplus availability maybe captured. Capturing willingness or likelihood adoption of newer technology that could save energy though at some price point is an important parameter for the behavior modelling of consumers.
4. Technology Distribution: Tracks progression of technology evolution as the time goes by and the availability of newer means to achieve the same need with lower energy requirement using advanced technology. This distribution further captures use of various energy rated applications for the same need. For example, air conditioners may come with different star ratings depending (certified by quality governing agencies) on their power consumption. How many of these appliances are currently with 3*, 4* or 5* ratings, and how is this distribution likely to change as years roll by, and so on are some data that affect the electricity consumption/need.
5. Usage Distribution: Longer projections of the energy use are simulated by various agents/consumers, and it is important to capture the evolution in their consumption behavior as a function of time and other factors such as economic advancements, weather conditions, changes in family size, etc. This information is captured using Usage Distribution data.
6. Energy Distribution: Size and scale of energy consumption distribution evolves with time. The energy distribution captures this information.

The Data Processor 501 loops over raw data available at each time step. The raw data belonging to each time step is processed to primarily extract the environmental, for example, ambient temperature, humidity, and land use, and distributions of different input parameters, for example, age, gender, income, and appliance usage distributions. A detailed block diagram of the data processor 501 is given in FIG. 8. As depicted in FIG. 8, the data processor 501 includes a data pre-processing module 506a, a feature weighting module 506d, a distribution extraction module 506g, and an environment extraction module 506j. The data preprocessing module 506a first removes noise, rearranges, and labels the data, to generate an associated preprocessed data. In an embodiment, the system 100 may be configured to allow users to define/specify one or more modeling workflows to preprocess the data, filter the data, build varied models and/or understand their variability in the data, and so on. In the process of preprocessing the input data, the data pre-processing module 506a may perform data validation, noise reduction or smoothing, outlier detection/filtering, and imputation, and so on. This is represented as data stream A in FIG. 8. This data is stored in the database as processed data. For example, monthly electricity consumption of various consumers shall be preprocessed here. The data processor 501, using the feature weighting module 506d from among a plurality of energy modules 506, identifies model inputs for various models. This list of features for models is shared as data stream B and stored in the database. For example, the influencing parameters of the electricity consumption of various consumers are identified here. For a residential consumer, this could relate to location of the apartment, the number of appliances in a house, capacity of the appliances, average day temperature, average night temperature, etc. Further, the data processor, using the distribution extraction module from among the plurality of energy modules, identifies distribution characteristics of the influencing inputs, and in the process, determines the number of output categories that needs to be captured. For example, after analyzing the consumer data, one may select x number of consumers with a monthly consumption of < 100 kWh, y number of consumers in 100-300 kWh, and z number of consumers for >300 kWh per month. This processing leads to data stream C. The data processor 501, using the environment extraction module 506j from among the plurality of energy modules 506, extracts environmental parameters, such as the temperature distribution of days in a month over the year. This processing leads to data stream E.

The preprocessed data is used by Feature Weighting Module (FWM) 506d to identify influence level of each input factor on the electricity demand. The preprocessed data and the influence information in the form of feature weights is then used by Distribution Extraction Module (DEM) 506g as in FIG. 9, and the Environment Extraction Module (EEM) 506j to extract input distributions and environment specific data respectively. Clustering and binning algorithms may be used to identify the typical and important archetypes of customers in each segment. The FWM 506d may be use appropriate Machine Learning (ML) algorithms to obtain correlation among the inputs, and their influence on the outputs, specifically on the electricity consumption. The results shall help in determining what inputs to use and what can be safely ignored without compromising the model accuracy. The DEM 506g may be invoked to develop a quantitative understanding of the statistical distribution of the input parameters. For residential consumers, it may capture distributions such as electricity consumption distribution, age distribution of the population, income distribution, residential size distribution, and so on.

The EEM 506j is responsible for gathering and providing information related to all the external factors including the ambient conditions such as temperature, humidity, technological factors such as different energy efficiency levels of new appliances, their cost and so on. Similarly, it shall process and provide information regarding calendar, land use, and electricity price policies.

During the training of the plurality of data models, the model trainer 502 processes the data in Table. 1 using methods such as but not limited to correlation analysis, to infer importance of each of the plurality of parameters in determining the electricity consumption. For example, how does the electricity consumption change based on population of a given area, income levels, day/night temperatures, business developments in the area, and so on. By processing the historical data, evolution of these influencing parameters are captured through databased models (also referred to as forecast models. For this purpose, data from multiple data sources in addition to power consumption data maybe required. For example, census data that is collected in every decade, record of birth/death in the area, different types of taxes remitted may be used to capture the past, present and future (in terms of specific timelines) socio-economic parameters of a given area. This data may be needed only at an anonymized level so that no personal information is compromised. In the absence of any data that is not critical for the simulation, it may be represented through soft-sensors or approximate models based on other available information. The forecasting models require the distribution parameters of the inputs and environmental factors. The model trainer (MT) 502 invokes one or more associated modules to obtain the distribution parameters from the preprocessed historical data.

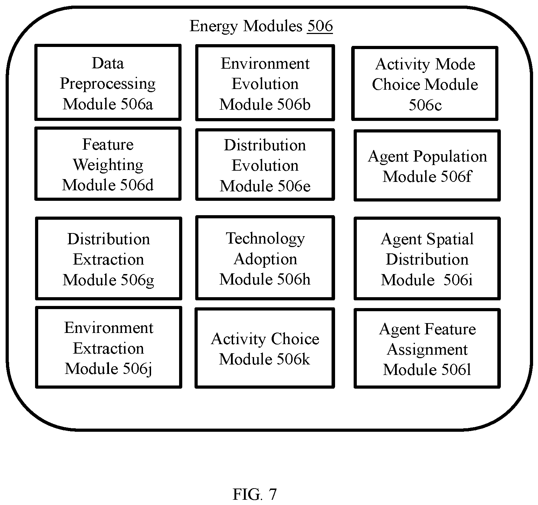

The Coupled Consumer Demand Predictor (CCDP) 504 of the system 100 is used for forecasting of the agent level electricity consumption. The CCDP 504 may use a plurality of energy modules, as depicted in FIG. 7, for the forecasting of the agent level electricity consumption. The energy modules 506 in the context of the embodiments disclosed herein may be hardware/software components, and/or a combination thereof. The energy modules 506 are data models that together form the integrated consumer model. In an embodiment, one or more of the energy modules 506 maybe combined to generate a residential consumer model (not shown), a transport consumer model (not shown), an industrial consumer model (not shown), an institutional consumer model (not shown), an agricultural consumer model (not shown), and an environmental model (not shown), which in turn forms the integrated consumer model. Each of the residential consumer model, the transport consumer model, the industrial consumer model, the institutional consumer model, the agricultural consumer model, and the environmental model maybe one of or a combination of are physics-driven, data-driven and hybrid models.

Examples of the energy modules 506 as depicted in FIG. 7 are detailed below. In an embodiment, with reference to the different components of the energy module, terms 'model' and 'module' are alternately used.
1. Data Preprocessing Module 506a: Performs the standard quality validation, noise reduction, outlier identification, and imputation tasks for a given data set. Depending on the dataset involved, different algorithms and hyper parameters tuned for these algorithms may be used.
2. Feature Weighting Module 506d: Is used to identify what features are correlated to a particular target variable, and which are not. This information is used for identifying the input parameters of a model or a multivariate imputation. This may be assisted by domain knowledge (must have inputs, should not be inputs, etc.) or purely data driven. Methods such as correlation coefficient, fischer score, random forest importance, and chi-square (for categorical variables) may be at this step for the purpose of feature weighting.
3. Distribution Extraction Module 506g: For the forecasting purpose, the system 100 has to contend with a sample group of consumers that captures the diversity in the population of various consumers, which is done based on characteristics of the existing and potential future distributions of consumers. For example, what is the economic distribution of individual (residential) consumers, population of residential consumers, spatial distribution of population, travelling distances of individuals, etc. Based on the actual data or simulated data for each of these attributes, a statistical distribution may be fit so that they can be captured compactly and sampled when setting up the simulation or during the simulation. These distributions do not have to adhere to the well-known normal/gaussian distribution, they could be distributions with skewness, multiple modes, and functions of multiple independent variables. Factors such as, when a person likely to get up, when is one likely to leave for office, shall be stochastic in the simulation and thus represented by a statistical distribution of some kind.
4. Environment Extraction Module 506j: Applicable to Environmental factors, such as how the ambient temperature, humidity, and wind velocity, in a region changes during the day, over the year, and so on. While such parameters may also follow certain physical laws or patterns, still there is a stochastic component to them. This is captured and processed by the EEM.
5. Environment Evolution Module 506b: Captures and stores how the environmental factors in question shall evolve over the years/periods to come and helps one to forecast their future behavior.
6. Distribution Evolution Module 506e: Captures and stores how the distribution factors in question shall evolve over the years/periods to come and helps one to forecast their future behavior. This information may be captured as a function of many independent factors.
7. Technology Adoption Module 506h: Is used to predict and forecast the likelihood of adoption of a new (electrical) technology by an agent from the current technology or newly. This is influenced by the consumers behavioral aspects, and factors such as incentives, economic comfort, technology comfort, etc., and it may be influenced by a peer group. One good example to demonstrate is the availability of EVs as a replacement of fossil-fuel based vehicles. The acceptance and widespread use of EVs shall depend on the pricing, technology maturity, availability, perceived (and real) environmental benignity of EVs, dependable (and fast) charging stations in a geography, peer pressure, age of the current vehicle being used, etc. The AI/ML, stock & flow, or heuristic model are used should consider these factors and make a prediction of the adoption of this technology. In some scenarios, availability of next-gen appliances that consume lesser power to provide the same service as updated technologies become available also may have to be projected. Another case would be electrification of industrial processes that depend on fossil-fuel for heating and process needs. When such alternate processes become available, what would be the adoption rate is to be predicted.
8. Activity Choice Module 506k: Captures the alternatives that may be available for performing the same activity. For example, when a person needs to go to office, the commute could be done using a personal transport (car, two-wheeler, etc.), or hired personalized transport such as taxis, etc. or use a public transport. Even in public transport, there are likely to be choices. Another example can be for cooking food, which electric appliance or a non-electric appliance could a consumer use.
9. Activity Mode Choice Module 506c: Predicts the influencing parameters for the electricity consumed or deferred consumption depending on the choice made by the consumers, which may vary based on individual/group preferences.
10. Agent Population Module 506f: Instantiates agents (consumers) based on the related distribution parameters as discussed earlier. For example, how many residential consumers, institutional consumers and industrial consumers be considered in a simulation shall be decided by this module based on the total consumers to be considered. It may also validate if the specifications shall be sufficient, and so on.
11. Agent Spatial Distribution Module 506i: Spatially distributes the consumers across the region depending on the (sub)regions characteristics. For example, where to place residential (and how many) consumers, and where all (and how many) to place industrial and institutional consumers.
12. Agent Feature Assignment Module 5061: Assigns the characteristic features for each agent created and spatially distributed, based on the location properties. These shall be distributed by the corresponding distribution parameters. For example, residential consumers allocated in a posh locality shall have larger apartments with more appliances when compared to someone in the middle-class locality. Similarly for other agents such as institutional, agricultural, industrial, etc. shall have their characteristics assigned by this module.

Workflow of the CCPD is depicted in FIG. 11, and is explained hereafter. Initially, the distribution evolution model 506e is used to predict various distributions of interest for a simulation being done, at a time instance, such as spatial distribution of different consumers, and their current values in time. Further, a Dynamic Agent Creator and Manager module of the functional implementation of system 100 as in FIG. 5 (not shown) creates the agents in required numbers of different types, and initializes them with representative features. Each agent's static (and evolving) characteristics and activities determine usage level of varied appliances (or equipment in industries) resulting in electricity consumption. Further, the Environmental evolution module (model) 506b is invoked for the current timestep to gather weather and admin policies that are used in the simulation of the timestep. Further, consumer sector simulators of the CCDP 504 perform sector wise simulations for each of the collective (and individual) agent to compute the energy consumption in the timestep. The simulations may be performed using a digital twin approach. In the sector wise simulation step, depending on the activities that human agent(s) is (was) involved in and the usage/load of appliances/equipment that are ON, electricity consumption of each of the appliance/equipment in the simulation is computed and summed up, thus amounting to the bottom-up calculation. This approach allows one to compute the electricity consumption at the granular level allowing for closer monitoring, and may in turn facilitate control the electricity consumption. For example, a residential agent's electricity consumption is computed by calculating the energy use of all the appliances that were used in the timestep considering the duration of their operation, load, and other appliance parameters. Similar computations are carried out for all the consumer segments. The sector-wise simulations may involve certain corrective (feedback) behavior, for example, may consider factors such as an agent's response to a price rise in the short, medium, and longer terms. Example of the corrective action is integration of switches that can leverage turning on appliances with flexible loads during the lean load periods or more production periods. Further, the electricity consumption of all the agents is summed up to obtain the needs of the all the consumers in the simulation. Further, the timestep is advanced and all the aforementioned steps are repeated. It is to be noted that, though not shown in the figures, the modules dynamic agent creator and manager, the consumer sector simulators, and the energy consumption simulator are components of the system 100 and specifically the CCDP 504.

The CCDP 504 provides the forecast of agent level electricity consumption, by processing the aforementioned information, using a distribution evolution module and a dynamic agent creator and manager. Functions of the distribution evolution module and the dynamic agent creator and manager are detailed below.

### 1. Distribution Evolution module 506e

Distributions are captured as they occur with observations from the past/present data. As the forecasting is done for a future timeline, forecasting of the evolution of electricity consumption is required. For example, how does the monthly electricity consumption of residential users in the middle-income group is likely to evolve in the next five, ten years and so on. Such projections may be made by using empirical models that suggest how the distribution parameters, such as mean and standard deviation shall change. Alternately, when binned approaches are used, it may become important to provide the projected data for each bin. Equation-based distribution models may only require information on how the equation parameters shall change over time, which can be accessed from the Distribution Evolution Module.

The Distribution Evolution module 506e uses any one or combination of "generic rule-based model", "stock and flow model" and "AI/ML/time-series models" to predict evolution of one or more of the input parameters. For example, the change in power consumption of an equipment with time can be predicted by employing "generic rule-based model" which uses life/condition of the equipment as input and engineering performance information available for the given type of equipment. Similarly, the evolution of population and associated age-wise distribution of population in each area are predicted using stock and flow type of models considering birth, death, and migration rates. In some scenarios, a more direct data-based AI/ML/time series predictors may be trained and used. In an embodiment, a user may be allowed to configure evolution time interval for each input category, and inputs in each category evolve according to the specified evolution time interval.

### 2. Dynamic Agent Creator and Manager

The system 100 may use separate models to predict electricity consumption by consumers belonging to different consumer segments, i.e., residential, transport, industry, institutional and so on. Then the total electricity consumption is predicted by aggregating individual sector demand. In this arrangement, the common features (e.g., income of an agent) at a given point of time may differ across different consumer segments. This can affect the collective electricity consumption forecast, especially within day variation of consumption.

The "Dynamic Agent Creator and Manager" is configured to facilitate uniform representation of consumer influence factors (techno-socio-economic condition and behavior) across all the consumer sectors. To achieve this, the Dynamic Agent Creator and Manager may consider certain segments, for example, the family, industry, and institutional entities, as collective or core agents and composed of individual agents, in addition to other factors, such as appliances/equipment, and so on. Different sub-components, for example, a "Collective Agent Creator & Manager" and an "Individual Agent Creator and Manager" maybe used to create core and individual agents respectively. For simplicity, the individual agents are used as is and no derived agents were created to model transport and agricultural sector electricity consumption. When public transport options are considered, it may become necessary to consider collective agents for EV buses, electric trains, and commercial transport EVs (for people or goods). An industry agent maybe tagged to each individual based on his/her occupation and stay location. This industry agent tagging is used to identify agent's work location while using transport model. The Dynamic Agent Creator and Manager uses input parameter distributions predicted by "Distribution Evolution Module" as inputs and creates and manages agents and their features.

Based on the predicted evolutions and the predicted electricity consumption, the CCDP 504 performs the forecasting of the agent level electricity consumption. In order to predict the electricity consumption, the distribution evolution model initially predicts various distributions of interest at a given timestep, such as spatial distribution of different consumers, and associated current values (in time). Further, the dynamic agent creator and manager module creates one or more necessary set of agents in required numbers of different type, and initializes them with representative features. Further, the environmental evolution model is invoked for the current timestep to gather weather and admin policies that shall be used in the simulation of the timestep. The CCDP 504 may further verify that an agent is attached to only relevant consumer segment that he/she has been part of in the time step of the simulation. For example, a residential consumer may move into transport agent category in the same timestep. The agent's requirement in both the categories are computed and tracked. In subsequent and few more timesteps, the agent may remain as the transport consumer. On reaching the office, the agent may become a part of the institutional consumer. This cycle shall return at the end of the workday. The CCDP 504 maintains repository of the agents, and their movements to track the contributions to different segments in every timestep. The CCDP 504 further performs synchronization to ensure that the agents are accounted only in one place at any given point depending on the activity or role that they are performing. Further, the CCDP 504 performs sector wise simulations for each of the collective (and individual) agents to compute the energy consumption in each timestep. In the simulation step, depending on the activities that human agent(s) is (was) involved in and the usage/load of appliances/equipment that are ON, electricity consumption of each of the appliance/equipment in the simulation is computed and summed up. Similar computations are carried out for all the consumer segments. The electricity consumption of all the agents is summed up to obtain the needs of the all the consumers. This is repeated for multiple time steps.

Further, the Forecast Aggregator (FA) 505 collates/aggregates the agent level consumptions into a desired level of aggregated electricity demand. Once the current data for the forecasted time instance is available, the Monitoring and Diagnosis Module (MDM) 508 examines the current data against the forecasted demand and input data, identifies the models for which forecast need to be improved, and retrains the identified models using Model Trainer (MT) 502.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problem of electricity prediction consumption for varying conditions. The embodiment thus provides a mechanism for electricity consumption prediction at agent level. Moreover, the embodiments herein further provide a mechanism for aggregating the agent level electricity consumption prediction to predict electricity consumption for a targeted area at a targeted time.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) of electricity consumption prediction, comprising:
receiving (202), via one or more hardware processors, a requirement data comprising a) a region of interest, b) a target time period;
predicting (204), via the one or more hardware processors, one or more distributions of interest for a plurality of agents from a population of the region of interest for the target time period, using a plurality of data models, wherein the one or more distributions of interest comprises of a spatial and temporal distribution of each of the plurality of agents and associated current values;
grouping (206), via the one or more hardware processors, each of the plurality of agents to one of a) an individual agent category, and b) a collective agent category, **characterized by** one or more activities being performed by each of the plurality of agents, by processing the spatial and temporal distribution of each of the plurality of agents and associated current values;
predicting (208), via the one or more hardware processors, the electricity consumption for the target time period, for each of the plurality of agents in the individual agent category and the collective agent category, based on a) the one or more distributions of interest predicted for each of the plurality of agents, b) information on one or more electrical devices and associated parameter values for the one or more distributions of interest, and c) a historical data with respect to one or more factors affecting the electricity consumption for the one or more distributions of interest and for the associated parameter values for different combinations of the one or more electrical devices; and
aggregating (210), via the one or more hardware processors, the predicted electricity consumption of the plurality of agents, to determine an electricity consumption at the region of interest.

2. The processor-implemented method (200) as claimed in claim 1, wherein one or more of the plurality of agents undergo transition between two or more agent categories during the target time period, wherein by following the transition between the two or more agent categories, associated one or more activities and one or more electrical devices are identified.

3. The processor-implemented method (200) as claimed in claim 1, wherein the plurality of data models comprises of a residential consumer model, a transport consumer model, an industrial consumer model, an institutional consumer model, an agricultural consumer model, and an environmental model, wherein the plurality of data models are physics-driven, data-driven and hybrid models, and wherein the plurality of data models are re-tuned if a measured accuracy of the electricity consumption prediction is below a threshold of accuracy.

4. The processor-implemented method (200) as claimed in claim 1, wherein the one or more factors affecting the electricity consumption, forming the historical data, and associated current data, comprises a) a weather data, b) a demographic and economic data, c) an energy price data, d) a calendar data, e) a technology data, f) an administrative and policy decision data, g) a land use data, and h) an usage and behaviour data.

5. The processor-implemented method (200) as claimed in claim 1, wherein the plurality of data models is trained using the historical data as training data, comprising:
pre-processing (302) the historical data to obtain a pre-processed historical data;
dividing the historical data to a training data set and a testing dataset;
training (304) each of the plurality of data models using the training data set to capture one or more distribution parameters associated with an energy consumption pattern of the historical data at each of a plurality of time instances; and
testing (306) each of the plurality of data models using the testing dataset, to obtain an associated confidence score, wherein each of the plurality of data models is retuned till the associated confidence score is at least matching a threshold of confidence score.

6. The processor-implemented method as claimed in claim 1, wherein the current values in the spatial distribution of each of the plurality of agents are associated with one or more of a current location of the agent, a collective group, an agent role, the one or more activities, and one or more electrical device characteristics.

7. The processor-implemented method as claimed in claim 1, wherein the distribution of interest comprises of a behavioral distribution of a plurality of roles associated with each of the plurality of agents, wherein each of the plurality of roles has an associated set of probable activities, and wherein the one or more electrical devices are associated with the set of probable activities.

8. A system (100) for electricity consumption prediction, comprising:
one or more hardware processors (102);
a communication interface (112); and
a memory (104) storing a plurality of instructions, wherein the plurality of instructions causes the one or more hardware processors to:
receive a requirement data comprising a) a region of interest, b) a target time period;
predict one or more distributions of interest for a plurality of agents from a population of the region of interest for the target time period, using a plurality of data models, wherein the one or more distributions of interest comprises of a spatial and temporal distribution of each of the plurality of agents and associated current values;
group each of the plurality of agents to one of a) an individual agent category, and b) a collective agent category, **characterized by** one or more activities, by processing the spatial and temporal distribution of each of the plurality of agents and associated current values;
predict the electricity consumption for the target time period, for each of the plurality of agents in the individual agent category and the collective agent category, based on a) the one or more distributions of interest predicted for each of the plurality of agents, b) information on one or more electrical devices and associated parameter values for the one or more distributions of interest, and c) a historical data with respect to one or more factors affecting the electricity consumption for the one or more distributions of interest and for the associated parameter values for different combinations of the one or more electrical devices; and
aggregate the predicted electricity consumption of the plurality of agents, to determine an electricity consumption at the region of interest.

9. The system as claimed in claim 8, wherein one or more of the plurality of agents undergo transition between two or more agent categories during the target time period, and wherein the one or more hardware processors are configured to identify associated one or more activities and one or more electrical devices by following the transition between the two or more agent categories.

10. The system as claimed in claim 8, wherein the plurality of data models comprises of a residential consumer model, a transport consumer model, an industrial consumer model, an institutional consumer model, an agricultural consumer model, and an environmental model, wherein the plurality of data models are physics-driven, data-driven and hybrid models, and wherein the plurality of data models are retuned if a measured accuracy of the electricity consumption prediction is below a threshold of accuracy.

11. The system as claimed in claim 8, wherein the one or more factors affecting the electricity consumption, forming the historical data and associated current data, comprises a) a weather data, b) a demographic and economic data, c) an energy price data, d) a calendar data, e) a technology data, f) an administrative and policy decision data, g) a land use data, and h) a usage and behaviour data.

12. The system as claimed in claim 8, wherein the one or more hardware processors are configured to train the plurality of data models using the historical data as training data, by:
pre-processing the historical data to obtain a pre-processed historical data;
dividing the historical data to a training data set and a testing dataset;
training each of the plurality of data models using the training data set to capture one or more distribution parameters associated with an energy consumption pattern of the historical data at each of a plurality of time instances; and
testing each of the plurality of data models using the testing dataset, to obtain an associated confidence score, wherein each of the plurality of data models is retuned till the associated confidence score is at least matching a threshold of confidence score.

13. The system as claimed in claim 8, wherein the current values in the spatial distribution of each of the plurality of agents are associated with one or more of a current location of the agent, a collective group, an agent role, the one or more activities, and one or more electrical device characteristics.

14. The system as claimed in claim 8, wherein the distribution of interest comprises of a behavioral distribution of a plurality of roles associated with each of the plurality of agents, wherein each of the plurality of roles has an associated set of probable activities, and wherein the one or more electrical devices are associated with the set of probable activities.

15. One or more non-transitory machine-readable information storage mediums comprising one or more instructions which when executed by one or more hardware processors cause:
receiving a requirement data comprising a) a region of interest, b) a target time period;
predicting one or more distributions of interest for a plurality of agents from a population of the region of interest for the target time period, using a plurality of data models, wherein the one or more distributions of interest comprises of a spatial and temporal distribution of each of the plurality of agents and associated current values;
grouping each of the plurality of agents to one of a) an individual agent category, and b) a collective agent category, **characterized by** one or more activities being performed by each of the plurality of agents, by processing the spatial and temporal distribution of each of the plurality of agents and associated current values;
predicting the electricity consumption for the target time period, for each of the plurality of agents in the individual agent category and the collective agent category, based on a) the one or more distributions of interest predicted for each of the plurality of agents, b) information on one or more electrical devices and associated parameter values for the one or more distributions of interest, and c) a historical data with respect to one or more factors affecting the electricity consumption for the one or more distributions of interest and for the associated parameter values for different combinations of the one or more electrical devices; and
aggregating the predicted electricity consumption of the plurality of agents, to determine an electricity consumption at the region of interest.
